# EUROPEAN PATENT SPECIFICATION

(11) **EP 3 668 128 B1**
(45) Date of publication and mention of the grant of the patent: **07.04.2021**
(21) Application number: 18212266.3
(22) Date of filing: 13.12.2018
(51) Int. Cl.: H04W 4/02, H04W 4/40, H04W 84/00, H04L 29/08, H04W 4/42, H04W 4/44, H04W 36/08, H04W 88/04

(54) **METHOD AND SYSTEM FOR COMMUNICATING BETWEEN A FIRST AND A SECOND APPLICATION**
VERFAHREN UND SYSTEM ZUR KOMMUNIKATION ZWISCHEN EINER ERSTEN UND EINER ZWEITEN ANWENDUNG
PROCÉDÉ ET SYSTÈME DE COMMUNICATION ENTRE UNE PREMIÈRE ET UNE SECONDE APPLICATION

(43) Date of publication of application: 17.06.2020
(73) Proprietor: KONTRON TRANSPORTATION FRANCE SAS, 78066 St Quentin Yvelines Cedex (FR)
(72) Inventor: TANE, Pierre, 92100 Boulogne-Billancourt (FR); JACQUES, Roger, 78320 Lévis Saint Nom (FR); BOTET, Gil, 78180 Montigny le Bretonneux (FR); GRUET, Christophe, 78180 Montigny le Bretonneux (FR)
(74) Representative: Weiser & Voith Patentanwälte Partnerschaft

(56) References cited:
- US-A1- 2014 233 412
- US-A1- 2018 049 110
- ZTE: "Considerations on eNB type RSU and UE type RSU", 3GPP DRAFT; R2-161163 CONSIDERATIONS ON ENB TYPE RSU AND UE TYPE RSU, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. St. Julian's, Malta; 20160215 - 20160219 14 February 2016 (2016-02-14), XP051055147, Retrieved from the Internet: URL:http://www.3gpp.org/ftp/Meetings_3GPP_ SYNC/RAN2/Docs/ [retrieved on 2016-02-14]

## Description

The present invention relates to a method and a system for communication between a first application on a vehicle and a second application remote from the vehicle. In particular, the present invention relates to embodiments in which the first application is hosted on a train and the second application is hosted on a ground-based server or on a different vehicle.

From US 2014/0233412 A1 it is known to mount an LTE base station with a core network onto a vehicle to set up an ad-hoc micro cell. US 2018/0049110 A1 discloses a mobile base station on a drone to communicate - with the help of regular base stations connected to a core network - with individual LTE mobile stations installed on the ground.

In cellular mobile phone network topologies according to the state of the art, communication is performed by means of setting up multiple base stations of the cellular mobile phone network on the ground such that the coverage areas of the base stations cover either a long stretch of road, in variants in which communication is to be performed along a road or track, for example for cars or trains, or more generally cover a two-dimensional area on the ground. The base stations are then connected to a stationary core network on the ground for communication with an application.

Mobile stations of the mobile phone network are usually carried by users arbitrarily from one place to another, for which purpose the mobile stations can be embodied as mobile phones or as applications hosted directly on vehicles, for example as onboard units on cars or as communication terminals on trains. During communication, when a mobile station is located within the communication range of one base station and moves to the communication range of a different base station, a handover has to be performed. Such handovers are a major concern of communication errors for applications that demand an uninterrupted communication connection to an application server.

A further disadvantage of classical cellular mobile phone networks is that the wireless channel on which communication is to be performed is constantly used over the whole area on which the mobile phone network is set up because each base station has to broadcast channel control information, while the mobile stations permanently monitor the channel to detect base stations for initial access and measure the quality of service (QoS) for potential handovers when connected.

It is therefore an aim of the invention to provide an improved method for communication that overcomes the above-mentioned drawbacks of the state of the art.

In a first aspect of the invention, this problem is solved by means of a method for communication between a first application on a vehicle and a second application remote from the vehicle, the method comprising:
mounting a base station of a cellular mobile phone network and a core network of the mobile phone network onto the vehicle,
mounting at least two mobile stations of the mobile phone network stationarily on the ground,
connecting the at least two mobile stations via an intermediate network to the second application,
communicating data between the first application and the base station via the core network on the vehicle,
wirelessly communicating said data between the base station on the vehicle and at least one of the mobile stations on the ground, and
communicating said data between the at least one mobile station on the ground and the second application via the intermediate network.

With the inventive method, communication is achieved which reverses the classical setup of stationary base stations and moveable mobile stations by mounting a whole base station and core network on a vehicle, for example a train, and stationarily mounting mobile stations on the ground. This has the effect that no complex handover mechanisms have to be performed when the vehicle is travelling. As the first application is always in direct connection with the base station, no situation can arise in which connections to different base stations have to be switched. In the novel method of the invention, the base station on the vehicle only has to manage (parallel) connections to different mobile stations, which is less troublesome than handovers from a single mobile station between different base stations. This is due to the fact that a base station can commonly host multiple connections to mobile stations while a mobile station is usually only ever connected to a single base station.

A further advantage of the inventive method is that the wireless channel is only used on a tightly located area centered around the vehicle for communication. As the mobile stations do not broadcast channel control information by themselves but only monitor the wireless channel to detect the presence of base stations in their vicinity, the usage of the wireless channel can be concentrated to the communication range of the base station on the vehicle. By means of this, two vehicles carrying different base stations can communicate independently in the same communication channel and might even communicate according to a different communication standard if they are located sufficiently far away from each other.

Preferably, the mobile stations and the base station wirelessly communicate with each other according to a 3GPP (3^{rd} Generation Partnership Project) 4G or 5G standard. Using a 4G or 5G standard has the advantage that base stations (called "eNodeB" in 4G and "gNodeB" in 5G) and mobile stations (called "user equipments", UE, in 4G and 5G) already have well-defined roles within the mobile phone network such that commercially available well-functioning devices can be used for implementing the method of the invention. Alternatively, any other standard could be used for communication, too, for example a 2G or 3G standard.

Further preferably, the method comprises the step of mounting the mobile stations at a predetermined distance from each other which is less than half, preferably less than a fourth, of a communication range of the base station. If the base station has several mobile stations in front of it, it can select the mobile stations having the best radio conditions when communication is required. Contrarily to the classical deployment scheme, for which communication quality of the mobile stations can change between good radio conditions when close to the base station and bad radio conditions at a boundary of the communication range of the base station, in the inventive method always the best mobile station can be selected for communication, yielding a constantly good communication quality. In contrast to the classical deployment scheme, the density of the stationary mobile stations can arbitrarily be increased due to the small investment cost in mobile stations in contrast to base stations.

If there are multiple vehicles carrying base stations in the field, situations can arise in which two vehicles come close to each other. It is then preferred if either of the two base stations only uses a predetermined subset of a channel on which communication is performed with the mobile stations when one base station detects the other base station in its vicinity. This is especially easy to implement if communication is performed according to a 4G or 5G standard because here channel resources are orthogonal to each other and can easily be "split". The subset can be chosen for example through frequency or time differentiation or a mix of both. As soon as the two vehicles are at a distance from each other that is larger than the communication range of the base stations, preferably the whole communication channel is used again for communication to maximise throughput.

In an especially preferred embodiment of the invention, the base station connects to multiple mobile stations at once and communicates data to and from each of the connected mobile stations. This has the advantage that not only the stationary mobile station with the best quality of service (QoS) level can be selected for communication, but multiple communication bearers can be set up for different purposes. For example, the same data could be transferred to the mobile stations to implement MIMO (Multiple-Input and Multiple-Output) communication or variants thereof. Alternatively, different data could be transferred via multiple mobile stations, too.

In the embodiment mentioned above it is preferred if the method comprises mounting a 1:N-connectivity gateway on the vehicle, connecting said gateway to the first application and the core network, and establishing a 1:N-multipath connection between the first application and the core network via the 1:N-connectivity gateway, N being the number of mobile stations connected to the base station. The 1:N-connectivity gateway has the advantage that the complexity of connecting to different mobile stations can be hidden from the first application on the vehicle. The gateway further has the advantage that either unicast communication or multicast communication can be employed.

In said embodiment it is further preferred if the method comprises mounting an N:1-connectivity gateway on the ground, connecting said gateway to the second application and the mobile stations, and establishing an N:1-multipath connection between the mobile stations and the second application via the N:1-connectivity gateway, N being the number of mobile stations connected to the base station. This has the advantage that the multipath connections can also be hidden from the second application, and the N:1-connectivity gateway can itself establish the bearers to connect to the multiple mobile stations. This gateway, too, can employ unicast or multicast communication.

It is further preferred if at least one, preferably at least two, of the stationary mobile stations communicate data to and from a stationary base station, which in turn communicates data to and from the second application. This has the advantage that the stationary mobile stations can act as intelligent relays between the base station carried by the vehicle and the stationary base station. In this embodiment, it is especially preferred if communication between the stationary mobile stations and the stationary base station is performed according to a 5G standard and beamforming is employed such that the stationary base station connects to each mobile station with a different beam.

In a second aspect, the invention provides a system for communicating between a first application on a vehicle and a second application remote from the vehicle, the system comprising:
a base station of a mobile phone network and a core network of the cellular mobile phone network mounted on the vehicle, the core network being configured to communicate data between the first application and the base station on the vehicle,
at least two mobile stations of the mobile phone network mounted stationarily on the ground, and
an intermediate network connecting the at least two mobile stations to the second application,
wherein the base station is configured to wirelessly communicate said data to and from the mobile stations on the ground, and
wherein the mobile stations are configured to communicate said data to and from the second application on the ground via the intermediate network.

For the inventive system, the same embodiments can be employed as described above for the inventive method. Furthermore, all of the advantages as detailed above for the method also hold for the inventive system.

The invention shall now be explained in more detail below on the basis of preferred exemplary embodiments thereof with reference to the accompanying drawings, in which:
Fig. 1 shows the inventive system in a schematic view, wherein communication is performed between a base station located on a train and stationary mobile stations;
Fig. 2 shows components of the inventive system in a schematic block diagram; and
Fig. 3 shows a variant of the inventive system of Fig. 1 in a schematic view.

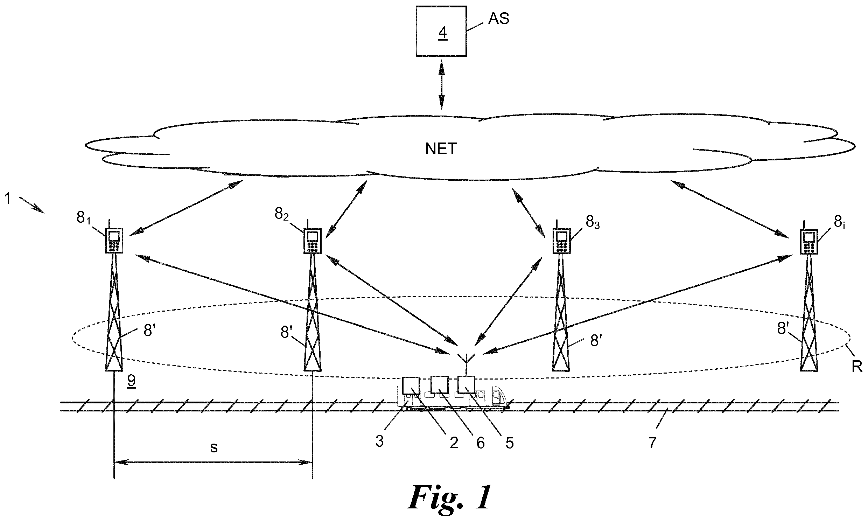

Fig. 1 shows a system 1, in which communication is performed between a first application 2 on a train 3 and a second application 4 remote from the train 3. Remote from the train 3 means in this context that the second application 4 is not present on the train 3 but resides, for example, on a stationary computer, a computer carried by a different vehicle, or on a mobile phone that is physically independent of the train 3, e.g., carried by a user riding said train 3.

Alternatively, instead of the first application 2 being on the train 3, the first application 2 could also be on a different vehicle, for example a car, truck, ship, drone, or there like.

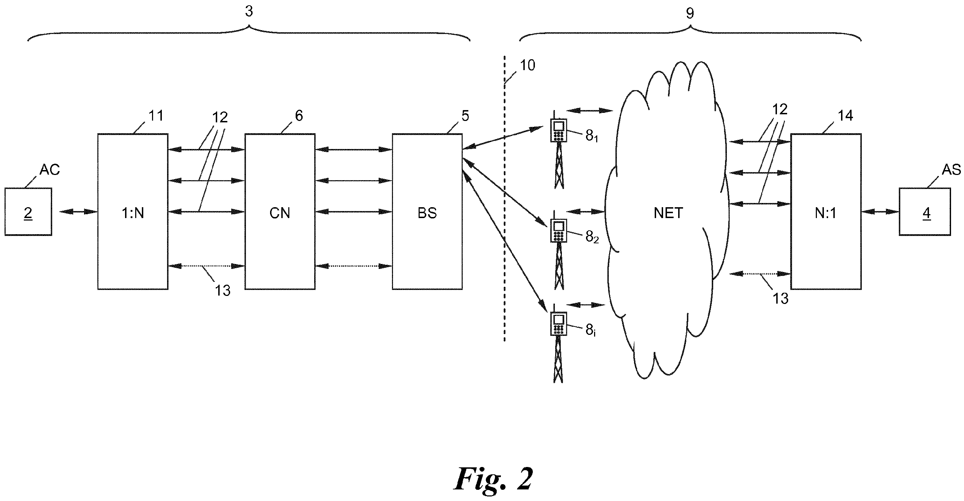

The first application 2 is in many embodiments hosted on an application client AC (Fig. 2), e.g., on a computer. The first application 2 could send and receive data packets of various kinds, e.g., IP data packets of a data or Voice-over-IP connection, or be a source or target of a line-switched call, e.g., a voice, SMS, or fax connection. The second application 4 is usually hosted on an application server AS or a different application client AC and can also send and receive packet-switched connections or terminate calls of line-switched connections, as described above.

Unlike in a classical cellular mobile phone network, a base station 5 of a cellular mobile phone network and a core network 6 of the cellular mobile phone network are mounted onto the train 3 instead of a mobile station. The base station 5 has a communication range R such that the communication range R moves together with the train 3 when it moves along a track 7.

The base station 5 mounted on the train can be a base station as usually used in mobile phone networks or can be specially adapted for the purpose of being mounted onto the train 3, e.g., stripped of parts unnecessary for this purpose. The core network 6 can even be reduced in such a way that all its necessary functions are incorporated into a single computer. The application client AC and the core network 6 could even be embodied by the same computer.

Along the track 7, at least two mobile stations 8ᵢ, i = 1, 2, 3, ..., of the mobile phone network are stationarily mounted, for example by means of a support 8' or gantry, on the ground 9. The stationary mobile stations 8ᵢ are in turn connected to the second application 4, either wirelessly or wire-bound.

In order to communicate between the first application 2 and the second application 4, data is communicated between the first application 2 and the base station 5 via the core network 6 on the train 3.

The base station 5 on the train 3 and at least one of the mobile stations 8ᵢ on the ground 9 communicate data wirelessly between them. This can be done according to any mobile communication standard known in the art, for example any of the 3GPP (3^{rd} Generation Partnership Project) 3G, 4G, or 5G standards. This means that the base station 5 and the mobile station 8ᵢ use a specific communication channel, e.g., over a predefined frequency range for communication. If communication is performed according to a 4G standard, for example LTE release 8 specified by 3GPP, the base station 5 is called eNodeB and the mobile stations 8ᵢ are called user equipments. If a 5G standard is used, for example as defined in IMT-2020 by ITU (International Telecommunication Union) or 5G NR specified by 3GPP (3^{rd} Generation Partnership Project), the base station 5 is called gNodeB and the mobile stations 8ᵢ are called user equipments.

Lastly, data is communicated between the at least one mobile station 8ᵢ on the ground 9 and the second application 4, e.g., via an intermediate network NET. Thereby, communication can be achieved between the first application 2 on the train 3 and the second application 4 remote from the train 3.

When communicating, data can be transferred in an uplink direction (from the first application 2 to the second application 4) or in a downlink direction (from the second application 4 to the first application 2). For uplink and downlink, different communication channels, e.g., different frequency bands and/or time slots, can be utilized.

As can be seen from Fig. 1, since the communication range R is defined by the base station 5 travelling with the vehicle, the communication channel used for wirelessly communicating between the base station 5 and mobile stations 8ᵢ is only occupied within the communication range R. This is due to the fact that only the base station 5 broadcasts channel control information while the mobile stations 8ᵢ, in idle mode, only monitor the wireless channel in order to detect the presence of a close by base station 5. It can thus be seen that outside of the communication range R, a different train 3 could travel while carrying a different base station 5 and use the same communication channel independently, even with a different communication standard.

As soon as two trains 3 come near each other, however, communication has to be coordinated. To this end, the mobile stations 8ᵢ can detect that multiple base stations 5 are approaching and provide this information to the base stations 5. Each base station 5 can then decide to only use a predetermined subset of the communication channel. For example, one of the base stations 5 uses the first half of a frequency range of the communication channel and the other base station 5 uses the second half of the frequency range of the communication channel. This is especially useful if wireless communication is performed by means of a 4G or 5G standard because channel resources are orthogonal such that the division of the communication channel can be done through frequency (by means of resource block management) or time (by means of subframe management). For example, when two trains 3 travel in opposite directions, the base stations 5 can be configured to manage their uplink and downlink communications by considering a resource block ranking from 1 to (K/2) and (K/2)+1 to K, respectively, K being the total number of resource blocks available. When two trains 3 are travelling in the same direction, the restriction rules could refer to subframe number. It can be seen that by means of this, a flexible separation of the frequency channel is achieved.

The different mobile stations 8ᵢ are each mounted with a predetermined distance s from each other which may be less than a half or less than a fourth of the communication range R of the base station 5. If the predetermined distance s is half of the communication range R, this effectively means that the density of stationary mobile stations 8ᵢ is double than the density of stationary base stations 5 in a classical mobile phone network. This increased density can be achieved because firstly mobile stations 8ᵢ are cheaper than base stations 5 and secondly because the base station 5 can always connect to multiple mobile stations 8ᵢ at the same time and no handover has to be performed in such cases, i.e., a higher density of base stations 5 would just lead to more handovers.

Communication when the base station 5 is connected to multiple mobile stations 8ᵢ at once is now explained with reference to Fig. 2. The wireless interface between the base station 5 and the mobile stations 8ᵢ is shown by numeral 10. Devices mounted on the train 3 are depicted to the left of interface 10 and devices located at a location remote from the train 3, such as the ground 9, are depicted to the right of interface 10.

It can be seen that the base station 5 is connected to three mobile stations 8ᵢ. More generally, the base station 5 could be connected to at least two mobile stations 8ᵢ. Each of the connections between the base station 5 and the mobile stations 8ᵢ usually has a different quality of service (QoS). This means that the base station 5 could in principle select the mobile station 8ᵢ with the best quality of service.

In some embodiments, it can however be advantageous to establish a communication bearer over each of the mobile stations 8ᵢ, for example to enable a MIMO (Multiple-Input and Multiple-Output), SIMO (Singe-Input and Multiple-Output), or MISO (Multiple-Input and Singe-Output) communication. In the simplest variant, the first application 2 itself could establish individual communication bearers by selecting the corresponding mobile stations 8ᵢ.

Alternatively, a 1:N-connectivity gateway 11 could be mounted on the train 3. This gateway 11 is connected to the first application 2 and the core network 6, acts as a default gateway for the first application 1, and manages the 1:N-connectivity translation between the first application 1 and the core network 6 mounted on the train 3. To achieve this, the gateway 11 establishes a 1:N-multipath connection between the first application 2 and the core network 6, N being the number of mobile stations 8ᵢ connected to the base station 5.

The gateway 11 can then either choose to establish independent unicast bearers for each of the connected mobile stations 8ᵢ (denoted by communication paths 12) or to establish a single multicast bearer (communication path 13). If the gateway 11 establishes a multicast bearer, the base station 5 will then communicate the multicast message to each of the connected mobile stations 8ᵢ. This is for example achieved by using an LTE standard that supports evolved multimedia broadcast multicast services (eMBMS).

An N:1-connectivity gateway 14 can furthermore be mounted on the ground 9 or at a remote location, for example at the location of the second application 4. The gateway 14 is on the one hand connected to the mobile stations 8ᵢ, for example via the intermediate network NET, and on the other hand to the second application 4. Similarly to the 1:N-connectivity gateway 11, the N:1-connectivity gateway 14 can establish an N:1-multipath connection between the mobile stations 8ᵢ and the second application 4. This can be done by establishing multiple unicast bearers 12 or a single multicast bearer 13.

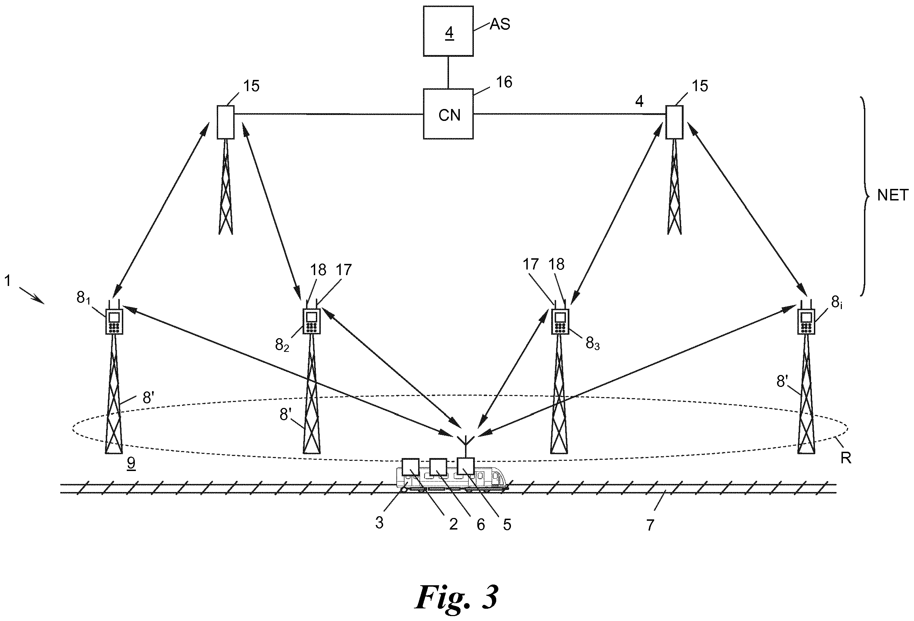

Fig. 3 shows one possible embodiment of the intermediate network NET. Here, the intermediate network NET comprises at least one stationary base station 15, for example one stationary base station 15 for each set of four stationary mobile stations 8ᵢ. The intermediate network NET can for example be a regular cellular mobile phone network according to the classical setup. Each stationary base station 15 is in turn connected to the second application 4, for example via a core network 16. The mobile stations 8ᵢ and the stationary base station 15 communicate wirelessly according to any radio communication standard known in the art, either in the same frequency band as the communication of mobile stations 8ᵢ and the moveable base station 5 is performed or in another frequency band.

For example, the mobile stations 8ᵢ could perform dual connectivity communications, i.e., communicate with the moveable base station 5 on the vehicle 3 and at the same time with the stationary base station 15 on the ground 9. Such dual connectivity communications are supported by 4G and 5G, for example. For these purposes, each stationary mobile station 8ᵢ could be equipped with two sets of antennas 17, 18, wherein one antenna 17 is directed towards the track 7, for example with a beamwidth of 90° (for example a dual beam antenna or two antennas with a splitter), and the other antenna 18 is directed towards the stationary base station 15 with a high directivity.

For using dual connectivity communications, in one practical embodiment dual registration is employed such that the stationary mobile stations 8ᵢ connect to the mobile base station 5 with a 4G standard and to the stationary base station 5 with a 5G standard or vice versa.

Alternatively, if dual connectivity communications are not supported by the mobile station 8ᵢ, each mobile station 8ᵢ could have a second mobile station (not shown) connected thereto, for example wired thereto, such that the mobile station 8ᵢ communicates with the stationary base station 15 via the second mobile station.

If communication between the stationary base station 15 and the mobile stations 8ᵢ is performed according to 5G, the stationary base station 15 can employ beamforming schemes such that it has one beam directed at each mobile station 8ᵢ. By means of this, full advantage can be taken of the features supported by 5G to increase the throughput of the system.

The invention is not restricted to the specific embodiments described in detail herein but encompasses all variants, combinations, and modifications thereof that fall within the framework of the appended claims.

## Claims

1. Method for communicating between a first application (2) on a vehicle (3) and a second application (4) remote from the vehicle (3), the method comprising:
mounting a base station (5) of a cellular mobile phone network and a core network (6) of the mobile phone network onto the vehicle (3),
mounting at least two mobile stations (8ᵢ) of the mobile phone network stationarily on the ground (9),
connecting the at least two mobile stations (8ᵢ) via an intermediate network (NET) to the second application (4),
communicating data between the first application (2) and the base station (5) via the core network (6) on the vehicle (3),
wirelessly communicating said data between the base station (5) on the vehicle (3) and at least one of the mobile stations (8ᵢ) on the ground (9), and
communicating said data between the at least one mobile station (8ᵢ) on the ground (9) and the second application (4) via the intermediate network (NET).

2. Method according to claim 1, wherein the mobile stations (8ᵢ) and the base station (5) wirelessly communicate with each other according to a 4G or 5G standard.

3. Method according to claim 1 or 2, wherein the method comprises the step of mounting the mobile stations (8ᵢ) at a predetermined distance (s) from each other which is less than half, preferably less than a fourth, of a communication range (R) of the base station (5).

4. Method according to any one of the claims 1 to 3, wherein the base station (5) only uses a predetermined subset of a channel on which communication is performed with the mobile stations (8ᵢ) when the base station (5) detects another base station (5) in its vicinity.

5. Method according to any one of the claims 1 to 4, wherein the base station (5) connects to multiple mobile stations (8ᵢ) at once and communicates data to and from each of the connected mobile stations (8ᵢ).

6. Method according to claim 5, wherein the method further comprises mounting a 1:N-connectivity gateway (11) on the vehicle (3), connecting said gateway (11) to the first application (2) and the core network (6), and establishing a 1:N-multipath connection between the first application (2) and the core network (6) via the 1:N-connectivity gateway (11), N being the number of mobile stations (8ᵢ) connected to the base station (5) .

7. Method according to claim 5 or 6, wherein the method further comprises mounting an N:1-connectivity gateway (14) on the ground (9), connecting said gateway (14) to the second application (4) and the mobile stations (8ᵢ), and establishing an N:1-multipath connection between the mobile stations (8ᵢ) and the second application (4) via the N:1-connectivity gateway (14), N being the number of mobile stations (8ᵢ) connected to the base station (5).

8. System for communicating between a first application (2) on a vehicle (3) and a second application (4) remote from the vehicle (3), the system (1) comprising:
a base station (5) of a mobile phone network and a core network (6) of the cellular mobile phone network mounted on the vehicle (3), the core network (6) being configured to communicate data between the first application (2) and the base station (5) on the vehicle (3),
at least two mobile stations (8ᵢ) of the mobile phone network mounted stationarily on the ground (9), and
an intermediate network (NET) connecting the at least two mobile stations (8ᵢ) to the second application (4),
wherein the base station (5) is configured to wirelessly communicate said data to and from the mobile stations (8ᵢ) on the ground (9), and
wherein the mobile stations (8ᵢ) are configured to communicate said data to and from the second application (4) on the ground (9) via the intermediate network (NET).

9. System according to claim 8, wherein the mobile stations (8ᵢ) and the base station (5) are configured to wirelessly communicate with each other according to a 4G or 5G standard.

10. System according to claim 8 or 9, wherein the mobile stations (8ᵢ) are each mounted at a predetermined distance (s) from each other which is less than half, preferably less than a fourth, of a communication range (R) of the base station (5).

11. System according to any one of claims 8 to 10, wherein the base station (5) is configured to detect another base station (5) in its vicinity and, upon detection, to only use a predetermined subset of a channel on which communication is performed with the mobile stations (8ᵢ).

12. System according to any one of claims 8 to 11, wherein the base station (5) is configured to connect to multiple mobile stations (8ᵢ) at once and to communicate data to and from each of the connected mobile stations (8ᵢ).

13. System according to claim 12, wherein the system (1) further comprises a 1:N-connectivity gateway (11) mounted on the vehicle (3), the 1:N-connectivity gateway (11) being connected to the first application (2) and the core network (6) and configured to establish a 1:N multipath connection between the first application (2) and the core network (6), N being the number of mobile stations (8ᵢ) connected to the base station (5) .

14. System according to claim 12 or 13, wherein the system (1) further comprises an N:1-connectivity gateway (14) remote from the vehicle (3), the N:1-connectivity gateway (14) being connected to the second application (4) and the mobile stations (8ᵢ) and configured to establish an N:1 multipath connection between the mobile stations (8ᵢ) and the second application (4), N being the number of mobile stations (8ᵢ) connected to the base station (5).

15. System according to any one of claims 8 to 14, wherein the system (1) further comprises at least one stationary base station (15) configured to wirelessly communicate data to and from at least one, preferably at least two, of the stationary mobile stations (8ᵢ).

## Patentansprüche

1. Verfahren zum Kommunizieren zwischen einer ersten Anwendung (2) auf einem Fahrzeug (3) und einer zweiten Anwendung (4) fern vom Fahrzeug (3), das Verfahren umfassend:
Montieren einer Basisstation (5) eines zellularen Mobilfunknetzes und eines Kernnetzes (6) des Mobilfunknetzes auf dem Fahrzeug (3),
Montieren zumindest zweier Mobilstationen (8ᵢ) des Mobilfunknetzes stationär am Boden (9),
Verbinden der zumindest zwei Mobilstationen (8ᵢ) mit der zweiten Anwendung (4) über ein intermediäres Netz (NET),
Kommunizieren von Daten zwischen der ersten Anwendung (2) und der Basisstation (5) über das Kernnetz (6) auf dem Fahrzeug (3),
drahtloses Kommunizieren dieser Daten zwischen der Basisstation (5) auf dem Fahrzeug (3) und zumindest einer der Mobilstationen (8ᵢ) auf dem Boden (9), und
Kommunizieren dieser Daten zwischen der zumindest einen Mobilstation (8ᵢ) auf dem Boden (9) und der zweiten Anwendung (4) über das intermediäre Netz (NET).

2. Verfahren nach Anspruch 1, wobei die Mobilstationen (8ᵢ) und die Basisstation (5) miteinander nach einem 4G- oder 5G-Standard drahtlos kommunizieren.

3. Verfahren nach Anspruch 1 oder 2, wobei das Verfahren den Schritt des Montierens der Mobilstationen (8ᵢ) in einem vorbestimmten Abstand (s) voneinander umfasst, der kleiner als die Hälfte, bevorzugt kleiner als ein Viertel, einer Kommunikationsreichweite (R) der Basisstation (5) ist.

4. Verfahren nach einem der Ansprüche 1 bis 3, wobei die Basisstation (5) nur eine vorbestimmte Teilmenge eines Kanals verwendet, auf welchem die Kommunikation mit den Mobilstationen (8ᵢ) ausgeführt wird, wenn die Basisstation (5) eine andere Basisstation (5) in ihrer Nähe detektiert.

5. Verfahren nach einem der Ansprüche 1 bis 4, wobei die Basisstation (5) sich mit mehreren Mobilstationen (8ᵢ) auf einmal verbindet und Daten von und zu jeder der verbundenen Mobilstationen (8ᵢ) kommuniziert.

6. Verfahren nach Anspruch 5, wobei das Verfahren ferner umfasst: Montieren eines Gateways (11) mit 1:N-Konnektivität auf dem Fahrzeug (3), Verbinden dieses Gateways (11) mit der ersten Anwendung (2) und dem Kernnetz (6) und Herstellen einer 1:N-Multipath-Verbindung zwischen der ersten Anwendung (2) und dem Kernnetz (6) über das Gateway (11) mit 1:N-Konnektivität, wobei N die Anzahl der mit der Basisstation (5) verbundenen Mobilstationen (8ᵢ) ist.

7. Verfahren nach Anspruch 5 oder 6, wobei das Verfahren ferner umfasst: Montieren eines Gateways (14) mit N:1-Konnektivität auf dem Boden (9), Verbinden dieses Gateways (14) mit der zweiten Anwendung (4) und den Mobilstationen (8ᵢ) und Herstellen einer N:1-Multipath-Verbindung zwischen den Mobilstationen (8ᵢ) und der zweiten Anwendung (4) über das Gateway (14) mit N:1-Konnektivität, wobei N die Anzahl der mit der Basisstation 5 verbundenen Mobilstationen (8ᵢ) ist.

8. System zum Kommunizieren zwischen einer ersten Anwendung (2) auf einem Fahrzeug (3) und einer zweiten Anwendung (4) fern vom Fahrzeug (3), das System (1) umfassend:
eine Basisstation (5) eines Mobilfunknetzes und ein Kernnetz (6) des zellularen Mobilfunknetzes, die jeweils auf dem Fahrzeug (3) montiert sind, wobei das Kernnetz (6) dazu ausgebildet ist, Daten zwischen der ersten Anwendung (2) und der Basisstation (5) auf dem Fahrzeug (3) zu kommunizieren,
zumindest zwei stationär am Boden (9) montierte Mobilstationen (8ᵢ) des Mobilfunknetzes, und
ein intermediäres Netz (NET), welches die zumindest zwei Mobilstationen (8ᵢ) mit der zweiten Anwendung (4) verbindet,
wobei die Basisstation (5) dazu ausgebildet ist, die genannten Daten von und zu den Mobilstationen (8ᵢ) auf dem Boden (9) zu kommunizieren, und
wobei die Mobilstationen (8ᵢ) dazu ausgebildet sind, die genannten Daten von und zu der zweiten Anwendung (4) auf dem Boden (9) über das intermediäre Netz (NET) zu kommunizieren.

9. System nach Anspruch 8, wobei die Mobilstationen (8ᵢ) und die Basisstation (5) dazu ausgebildet sind, miteinander nach einem 4G- oder 5G-Standard drahtlos zu kommunizieren.

10. System nach Anspruch 8 oder 9, wobei die Mobilstationen (8ᵢ) jeweils in einem vorbestimmten Abstand (s) voneinander montiert sind, der kleiner als die Hälfte, bevorzugt kleiner als ein Viertel, einer Kommunikationsreichweite (R) der Basisstation (5) ist.

11. System nach einem der Ansprüche 8 bis 10, wobei die Basisstation (5) dazu ausgebildet ist, eine andere Basisstation (5) in ihrer Nähe zu detektieren und bei erfolgter Detektion nur eine vorbestimmte Teilmenge eines Kanals zu verwenden, auf welchem die Kommunikation mit den Mobilstationen (8ᵢ) ausgeführt wird.

12. System nach einem der Ansprüche 8 bis 11, wobei die Basisstation (5) dazu ausgebildet ist, sich mit mehreren Mobilstationen (8ᵢ) auf einmal zu verbinden und Daten von und zu jeder der verbundenen Mobilstationen (8ᵢ) zu kommunizieren.

13. System nach Anspruch 12, wobei das System (1) ferner ein am Fahrzeug (3) montiertes Gateway (11) mit 1:N-Konnektivität umfasst, wobei das Gateway (11) mit 1:N-Konnektivität mit der ersten Anwendung (2) und dem Kernnetz (6) verbunden und dazu ausgebildet ist, eine 1:N-Multipath-Verbindung zwischen der ersten Anwendung (2) und dem Kernnetz (6) herzustellen, wobei N die Anzahl der mit der Basisstation (5) verbundenen Mobilstationen (8ᵢ) ist.

14. System nach Anspruch 12 oder 13, wobei das System (1) ferner ein Gateway (14) mit N:1-Konnektivität fern vom Fahrzeug (3) umfasst, wobei das Gateway (14) mit N:1-Konnektivität mit der zweiten Anwendung (4) und den Mobilstationen (8ᵢ) verbunden und dazu ausgebildet ist, eine N:1-Multipath-Verbindung zwischen den Mobilstationen (8ᵢ) und der zweiten Anwendung (4) herzustellen, wobei N die Anzahl der mit der Basisstation (5) verbundenen Mobilstationen (8ᵢ) ist.

15. System nach einem der Ansprüche 8 bis 14, wobei das System (1) ferner zumindest eine stationäre Basisstation (15) umfasst, die dazu ausgebildet ist, Daten von und zu zumindest einer, bevorzugt zumindest zweien, der stationären Mobilstationen (8ᵢ) drahtlos zu kommunizieren.

## Revendications

1. Procédé de communication entre une première application (2) sur un véhicule (3) et une seconde application (4) éloignée du véhicule (3), le procédé comprenant :
le montage d'une station de base (5) d'un réseau de téléphonie mobile cellulaire et d'un réseau central (6) du réseau de téléphonie mobile sur le véhicule (3),
le montage d'au moins deux stations mobiles (8ᵢ) du réseau de téléphonie mobile de manière fixe sur le sol (9),
la connexion des au moins deux stations mobiles (8ᵢ) au moyen d'un réseau intermédiaire (NET) à la seconde application (4),
la communication des données entre la première application (2) et la station de base (5) au moyen du réseau central (6) sur le véhicule (3),
la communication sans fil desdites données entre la station de base (5) sur le véhicule (3) et au moins l'une des stations mobiles (8ᵢ) sur le sol (9), et
la communication desdites données entre l'au moins une station mobile (8ᵢ) sur le sol (9) et la seconde application (4) par le biais du réseau intermédiaire (NET).

2. Procédé selon la revendication 1, dans lequel les stations mobiles (8ᵢ) et la station de base (5) communiquent entre elles sans fil selon une norme 4G ou 5G.

3. Procédé selon la revendication 1 ou 2, où le procédé comprend l'étape de montage des stations mobiles (8ᵢ) à une distance prédéterminée (s) l'une par rapport à l'autre, quelle distance est inférieure à la moitié, de préférence inférieure au quart, d'une portée de communication (R) de la station de base (5).

4. Procédé selon l'une quelconque des revendications 1 à 3, dans lequel la station de base (5) utilise seulement un sous-ensemble prédéterminé d'un canal sur lequel la communication est réalisée avec les stations mobiles (8ᵢ) lorsque la station de base (5) détecte une autre station de base (5) dans son voisinage.

5. Procédé selon l'une quelconque des revendications 1 à 4, dans lequel la station de base (5) se connecte à de multiples stations mobiles (8ᵢ) en même temps et communique des données en direction et en provenance de chacune des stations mobiles (8ᵢ) connectées.

6. Procédé selon la revendication 5, où le procédé comprend en outre le montage d'une passerelle (11) de connectivité 1 : N sur le véhicule (3), la connexion de ladite passerelle (11) à la première application (2) et au réseau central (6), et l'établissement d'une connexion 1 : N par trajets multiples entre la première application (2) et le réseau central (6) par le biais de la passerelle (11) de connectivité 1 : N, N étant le nombre de stations mobiles (8ᵢ) connectées à la station de base (5).

7. Procédé selon la revendication 5 ou 6, où le procédé comprend en outre le montage d'une passerelle (14) de connectivité N : 1 sur le sol (9), la connexion de ladite passerelle (14) à la seconde application (4) et aux stations mobiles (8ᵢ), et l'établissement d'une connexion N : 1 par trajets multiples entre les stations mobiles (8ᵢ) et la seconde application (4) par le biais de la passerelle (14) de connectivité N : 1, N étant le nombre de stations mobiles (8ᵢ) connectées à la station de base (5).

8. Système de communication entre une première application (2) sur un véhicule (3) et une seconde application (4) éloignée du véhicule (3), le système (1) comprenant :
une station de base (5) d'un réseau de téléphonie mobile et d'un réseau central (6) du réseau de téléphonie mobile cellulaire montée sur le véhicule (3), le réseau central (6) étant configuré pour communiquer des données entre la première application (2) et la station de base (5) sur le véhicule (3),
au moins deux stations mobiles (8ᵢ) du réseau de téléphonie mobile montées de manière fixe sur le sol (9), et
un réseau intermédiaire (NET) connectant les au moins deux stations mobiles (8ᵢ) à la seconde application (4),
où la station de base (5) est configurée pour communiquer sans fil lesdites données en direction et en provenance des stations mobiles (8ᵢ) sur le sol (9), et
où les stations mobiles (8ᵢ) sont configurées pour communiquer lesdites données en direction et en provenance de la seconde application (4) sur le sol (9) par le biais du réseau intermédiaire (NET).

9. Système selon la revendication 8, dans lequel les stations mobiles (8ᵢ) et la station de base (5) sont configurées pour communiquer l'une avec l'autre sans fil selon une norme 4G ou 5G.

10. Système selon la revendication 8 ou 9, dans lequel les stations mobiles (8ᵢ) sont montées chacune à une distance prédéterminée (s) l'une par rapport à l'autre, quelle distance est inférieure à la moitié, de préférence inférieure au quart de la portée de communication (R) de la station de base (5).

11. Système selon l'une quelconque des revendications 8 à 10, dans lequel la station de base (5) est configurée pour détecter une autre station de base (5) dans son voisinage et, en cas de détection, utiliser seulement un sous-ensemble prédéterminé d'un canal sur lequel la communication est réalisée avec les stations mobiles (8ᵢ).

12. Système selon l'une quelconque des revendications 8 à 11, dans lequel la station de base (5) est configurée pour se connecter à de multiples stations mobiles (8ᵢ) en même temps et pour communiquer des données en direction et en provenance de chacune des stations mobiles (8ᵢ) connectées.

13. Système selon la revendication 12, où le système (1) comprend en outre une passerelle (11) de connectivité 1 : N montée sur le véhicule (3), la passerelle (11) de connectivité 1 : N étant connectée à la première application (2) et au réseau central (6) et configurée pour établir une connexion 1 : N par trajets multiples entre la première application (2) et le réseau central (6), N étant le nombre de stations mobiles (8ᵢ) connectées à la station de base (5).

14. Système selon la revendication 12 ou 13, où le système (1) comprend en outre une passerelle (14) de connectivité N : 1 éloignée du véhicule (3), la passerelle (14) de connectivité N : 1 étant connectée à la seconde application (4) et aux stations mobiles (8ᵢ) et configurée pour établir une connexion N : 1 par trajets multiples entre les stations mobiles (8ᵢ) et la seconde application (4), N étant le nombre de stations mobiles (8ᵢ) connectées à la station de base (5).

15. Système selon l'une quelconque des revendications 8 à 14, où le système (1) comprend en outre au moins une station de base (15) fixe configurée pour communiquer sans fil des données en direction et en provenance d'au moins d'une, de préférence d'au moins de deux, des stations mobiles (8ᵢ) fixes.
